# EUROPEAN PATENT APPLICATION

(11) **EP 2 444 721 A1**
(43) Date of publication of application: **25.04.2012**
(21) Application number: 10789116.0
(22) Date of filing: 29.01.2010
(51) Int. Cl.: F21V 8/00, F21S 2/00, H01L 31/04, F21Y 103/00, G01N 17/00

(54) **LIGHT SOURCE APPARATUS AND SIMULATED SOLAR LIGHT IRRADIATION APPARATUS PROVIDED WITH SAME**

(30) Priority: 19.06.2009 JP 2009146957
(71) Applicant: Sharp Kabushiki Kaisha, Osaka-shi, Osaka 545-8522 (JP)
(72) Inventor: FUJIHARA, Norito, Osaka-shi, Osaka 545-8522 (JP)
(74) Representative: Müller - Hoffmann & Partner
(86) International application number: PCT/JP2010/000553
(87) International publication number: WO 2010/146731

(57) **Abstract**

A light source device according to the present invention includes: a light source section; a light guide member provided at a position where the light guide member receives light emitted from the light source section, the light guide member having a tapered shape in which the light guide member gradually increases in width from its incident surface toward its emission surface, and an optical filter provided at a position where the optical filter receives light emitted from the light guide member, the optical filter reducing a spectrum having a predetermined waveband from the light. This makes it possible to provide a light source device which can control a radiation angle of light and which is downsized, and a pseudo-sunlight irradiation device including the light source device.

## Description

### Technical Field

The present invention relates to a pseudo-sunlight irradiation device for irradiating pseudo sunlight, and a light source device provided in the pseudo-sunlight irradiation device.

### Background Art

In recent year, demand for devices that can irradiate artificial light (pseudo sunlight) close to sunlight has increased. Especially, among these devices, a device capable of irradiating, with high accuracy, pseudo sunlight applicable to examination, measurement, and experiments of solar batteries is highly expected, as solar battery techniques have been rapidly developed and come into wide use.

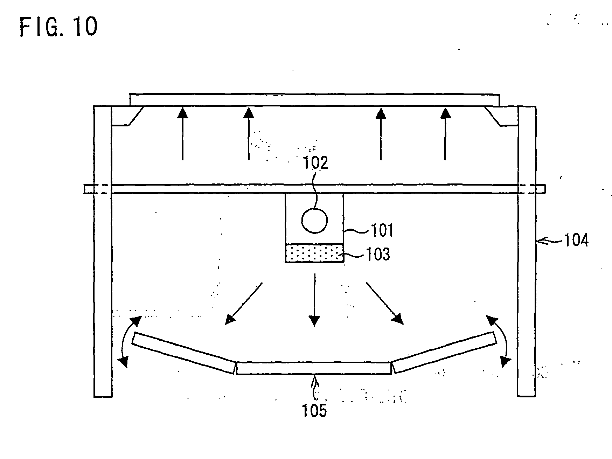

A main element requested for the pseudo sunlight is that the pseudo light has an emission spectrum more approximate to that of natural sunlight. Patent Literature 1 discloses, as one example, a pseudo-sunlight irradiation device employing a diffused-light irradiation technique. Fig. 10 illustrates an arrangement of the pseudo-sunlight irradiation device. The pseudo-sunlight irradiation device illustrated in Fig. 10 is provided with: a lamp housing 101 including a lamp, such as a xenon lamp 102, provided inside the lamp housing 101, and an optical filter 103 attached to a light-irradiated surface of the lamp housing 101, which surface has an area smaller than an area to which pseudo sunlight is irradiated; and a reflective plate 105 provided so as to face a side of the lamp housing 101, on which side the optical filter 103 is provided. The pseudo-sunlight irradiation device irradiates pseudo sunlight by causing xenon light to pass through the optical filter 103.

### Citation List

Patent Literature 1
   Japanese Patent Application Publication, Tokukai, No. 2003-28785 A (Publication Date: January 29, 2003)

### Summary of Invention

### Technical Problem

However, in the arrangement illustrated in Fig. 10, a directivity (radiation angle) of light to enter the optical filter 103 is not controlled. That is, the arrangement does not have any component for controlling the directivity of light irradiated from the xenon lamp 102 until the light enters the optical filter 103. On this account, in the arrangement, scattering light enters the optical filter 103. The arrangement illustrated in Fig. 10 causes, therefore, such a problem that light loss through the optical filter 103 having an incidence angle dependence is large and a characteristic of the optical filter 103 cannot be leveraged sufficiently, so that a desired characteristic cannot be obtained.

### Solution to Problem

The present invention is accomplished in view of the above problem. An object of the present invention is to provide a light source device which can control a radiation angle of light and which is downsized, and a pseudo-sunlight irradiation device including the light source device.

That is, in order to achieve the above object, a light source device according to the present invention includes: a light source section including a light source; a light guide member provided at a position where the light guide member receives light emitted from the light source section; and a spectrum modulation member provided at a position where the spectrum modulation member receives light emitted from the light guide member, the light guide member further including: an incident surface via which the light emitted from the light source section is received; and an emission surface from which the light thus received via the incident surface is emitted after the light is guided into a light-guiding region having a side surface serving as a light reflection plane that reflects the light, the light guide member having a tapered shape in which the light guide member gradually increases in width from the incident surface toward the emission surface, the spectrum modulation member reducing a spectrum having a predetermined waveband from the light thus received from the light guide member, and then emitting the light.

With the arrangement, the light source device according to the present invention can control, by the light guide member, a directivity (radiation angle) of light to enter the spectrum modulation member.

More specifically, the light guide member receives light via its incident surface and then guides the light to a light-guiding region having a side surface serving as a light reflection plane. In the light-guiding region, the light repeatedly reflects off the light reflection plane, thereby resulting in that a radiation angle of the light is controlled.

In addition, the light guide member has a tapered shape in which the light guide member gradually increases in width from the incident surface toward the emission surface. This makes it possible to change a radiation directivity of the light passing inside the light guide member (the light-guiding region) from random directions into a given direction.

As a result, light having a predetermined directivity is emitted from the emission surface of the light guide member.

By providing the light guide member arranged as such, between the light source section and the spectrum modulation member, it is possible to cause such light having a predetermined directivity to enter the spectrum modulation member.

The spectrum modulation member is a so-called optical filter, and has an incidence angle dependence, as described above. In the conventional arrangement, this causes various problems because light having a predetermined directivity does not enter the optical filter. In contrast, the arrangement of the present invention allows the spectrum modulation member to receive light suitable for its incidence angle dependence. This makes it possible to markedly restrain light loss. Further, it is possible to fully utilize a characteristic of the spectrum modulation member.

As such, with the arrangement of the present invention, the spectrum modulation member (the optical filter) can sufficiently adjust (modulate) light, as compared with the conventional arrangement. Accordingly, when the light source device of the present invention is provided as a light source device in a pseudo-sunlight irradiation device, it is possible to realize a device that can radiate light more approximate to sunlight.

Further, with the arrangement of the present invention, it is possible to cause light having a predetermined directivity to enter the spectrum modulation member, thereby realizing downsizing of a device as compared with the conventional arrangement. The realization of the downsizing of the device as such further attains downsizing of a pseudo-sunlight irradiation device by providing the light source device of the present invention as a light source device in the pseudo-sunlight irradiation device.

Furthermore, the present invention also includes a pseudo-sunlight irradiation device including a light source device having the arrangement described above.

Further, the pseudo-sunlight irradiation device according to the present invention may further include a light guide plate for receiving light emitted from a spectrum modulation member provided in the light source device.

Additional objects, features, and strengths of the present invention will be made clear by the description below. Further, the advantages of the present invention will be evident from the following explanation in reference to the drawings.

### Advantageous Effects of Invention

As described above, the light source device according to the present invention and the pseudo-sunlight irradiation device, according to the present invention, including the light source device are each arranged such that the light source device includes: a light source section including a light source; a light guide member provided at a position where the light guide member receives light emitted from the light source section; and a spectrum modulation member provided at a position where the spectrum modulation member receives light emitted from the light guide member, the light guide member further including: an incident surface via which the light emitted from the light source section is received; and an emission surface from which the light thus received via the incident surface is emitted after the light is guided into a light-guiding region having a side surface serving as a light reflection plane that reflects the light, and the light guide member having a tapered shape in which the light guide member gradually increases in width from the incident surface toward the emission surface, the spectrum modulation member reducing a spectrum having a predetermined waveband from the light thus received from the light source section, and then emitting the light.

This makes it possible to provide a light source device which can control a radiation angle of light and which is downsized, and a pseudo-sunlight irradiation device including the light source device.

### Brief Description of Drawings

Fig. 1

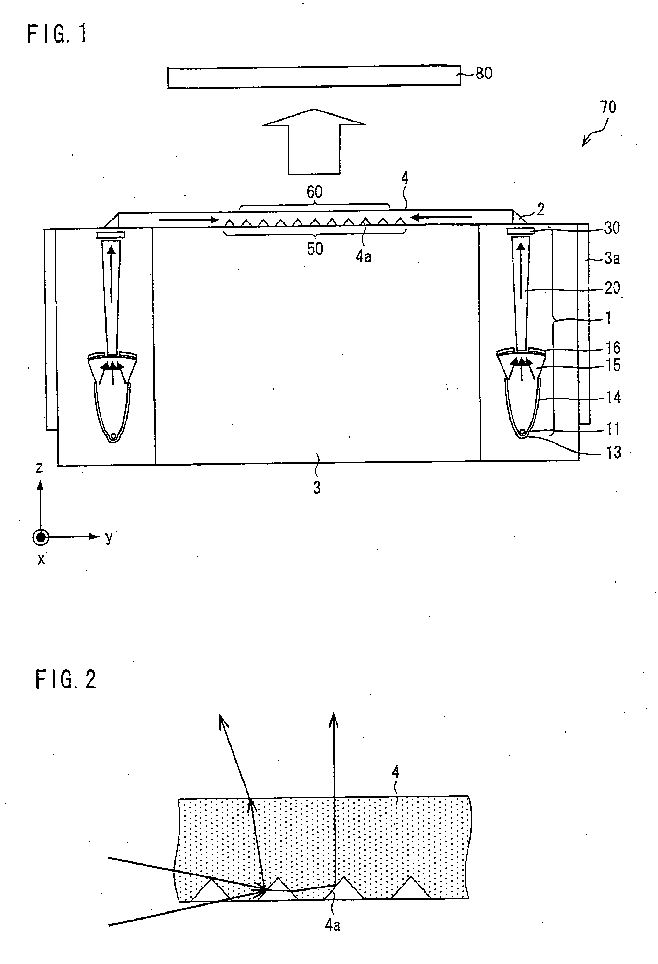

   Fig. 1 is a view illustrating an arrangement of a pseudo-sunlight irradiation device according to one embodiment of the present invention.
Fig. 2
   Fig. 2 is an enlarged view partially illustrating the pseudo-sunlight irradiation device.
Fig. 3

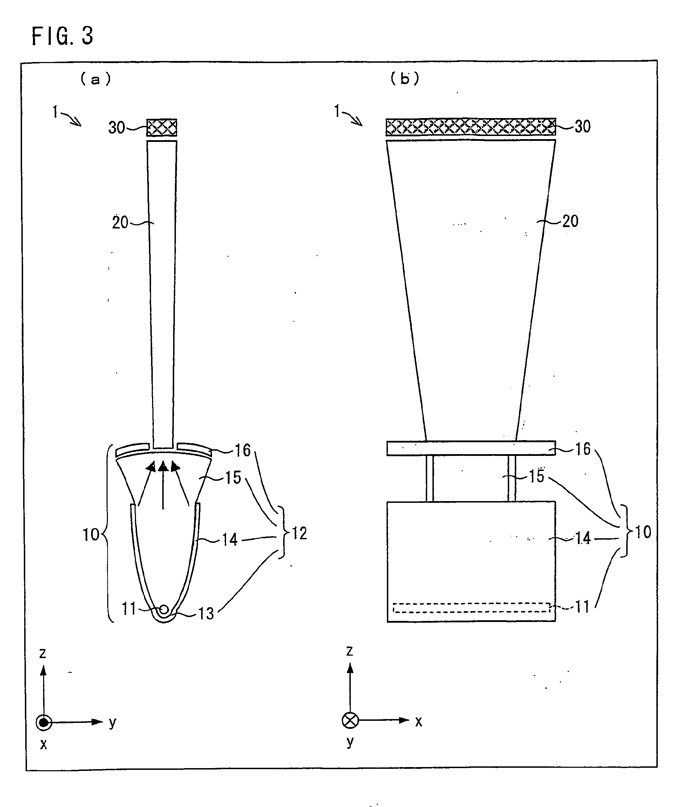

   Fig. 3 is a view illustrating an arrangement of a light source device provided in the pseudo-sunlight irradiation device illustrated in Fig. 1.
Fig. 4

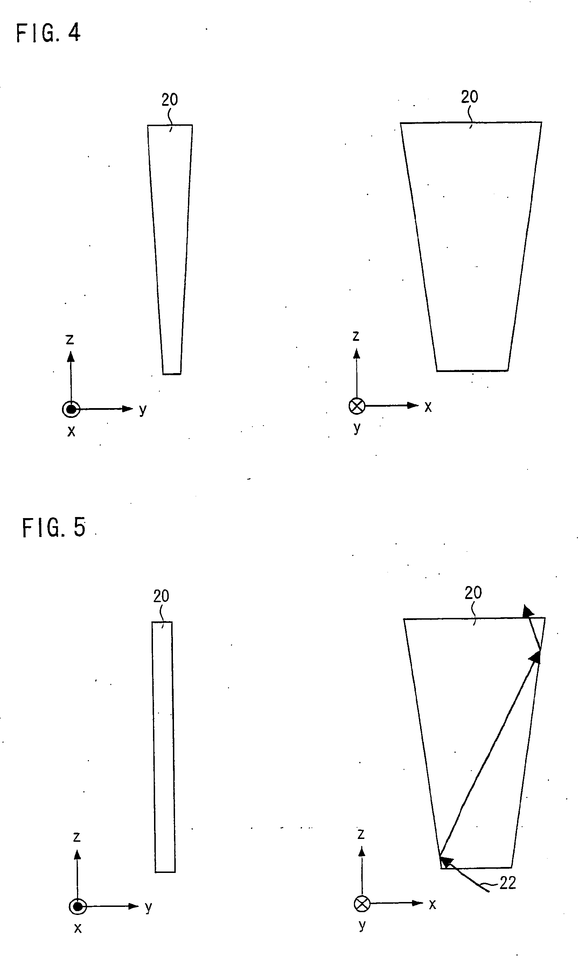

   Fig. 4 is views each partially illustrating the arrangement of the light source device provided in the pseudo-sunlight irradiation device illustrated in Fig. 1.
Fig. 5
   Fig. 5 is views each partially illustrating the arrangement of the light source device provided in the pseudo-sunlight irradiation device illustrated in Fig. 1.
Fig. 6

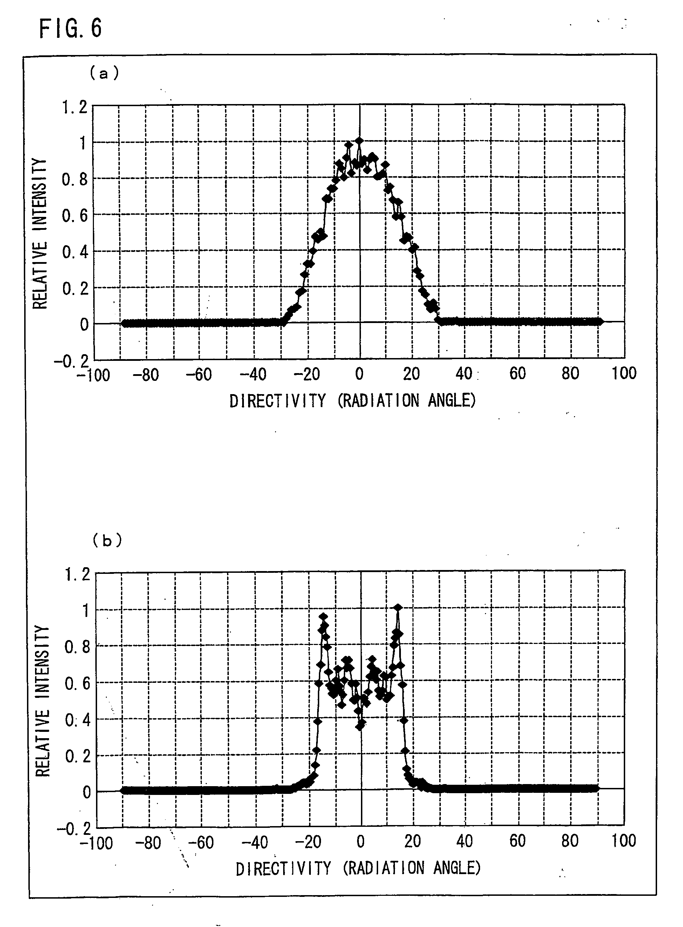

   Fig. 6 is graphs each showing a result of examination of a directivity of the light source device provided in the pseudo-sunlight irradiation device illustrated in Fig. 1. (a) of Fig. 6 is a graph showing a directivity distribution in an x direction on an emission surface of a light guide member. (b) of Fig. 6 is a graph showing a directivity distribution in a y direction on the emission surface of the light guide member.
Fig. 7

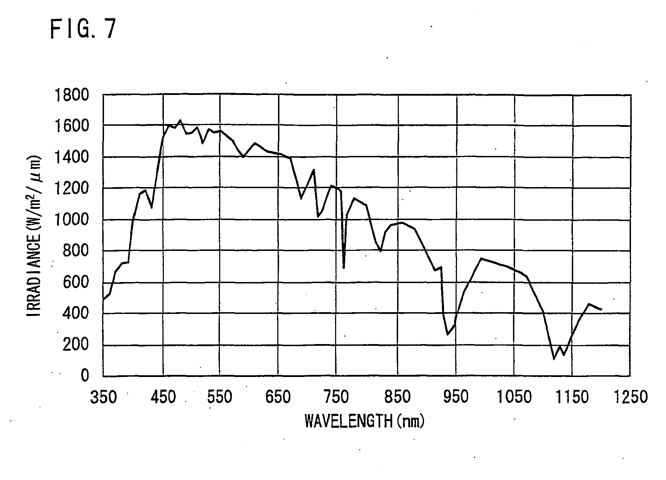

   Fig. 7 is a graph showing a standard spectrum of sunlight.
Fig. 8

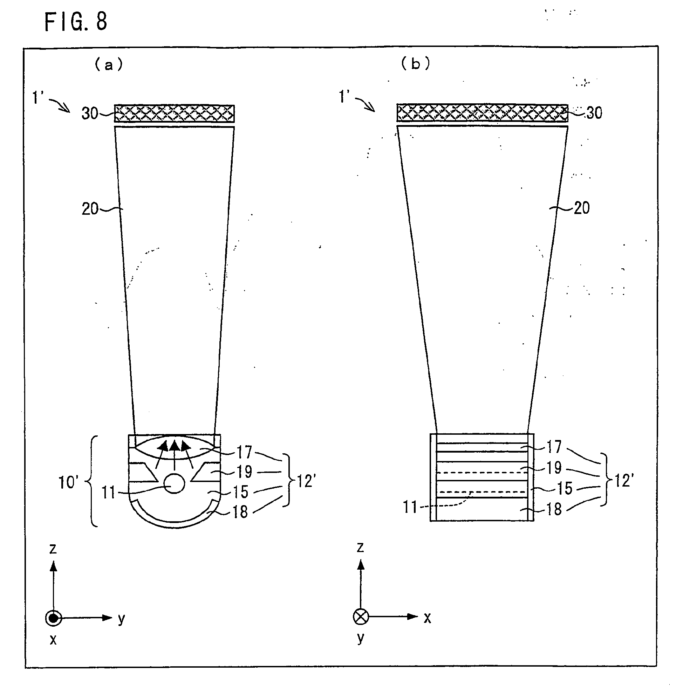

   Fig. 8 is a view illustrating another arrangement of a light source device provided in a pseudo-sunlight irradiation device according to one embodiment of the present invention.
Fig. 9

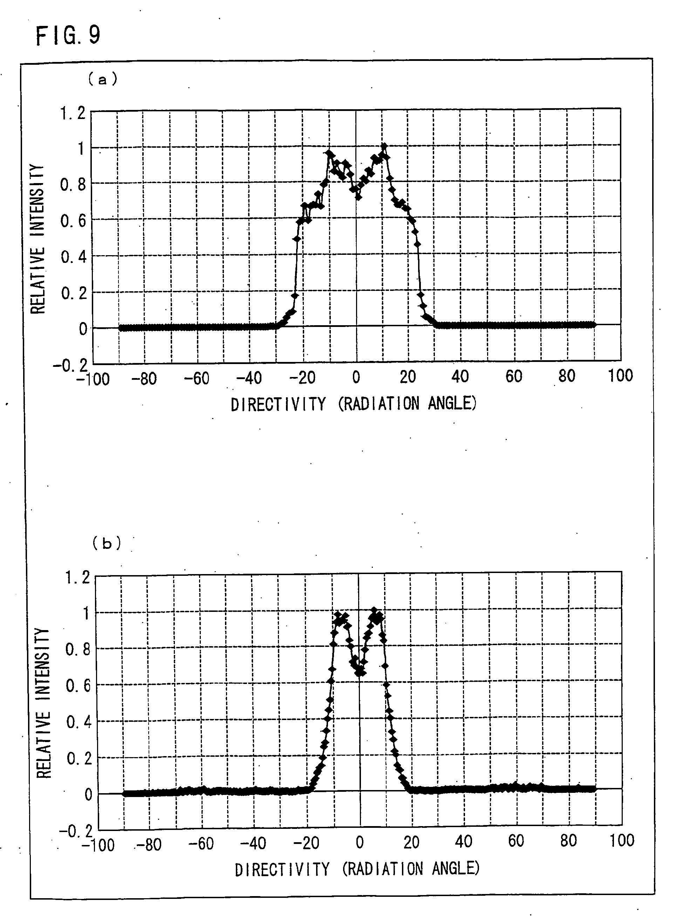

   Fig. 9 is graphs each showing a result of examination of a directivity of the light source device illustrated in Fig. 8. (a) of Fig. 9 is a graph showing a directivity distribution in an x direction on an emission surface of a light guide member. (b) of Fig. 9 is a graph showing a directivity distribution in a y direction on the emission surface of the light guide member.
Fig. 10
   Fig. 10 is a view illustrating an arrangement of a conventional pseudo-sunlight irradiation device.

### Description of Embodiments

### [Embodiment 1]

One embodiment of the present invention is described below with reference to Fig. 1 through Fig. 7. More specifically, the present embodiment deals with a pseudo-sunlight irradiation device 70 for irradiating pseudo sunlight to a light-irradiated surface 80, as illustrated in Fig. 1. The pseudo sunlight is one type of artificial light and has an emission spectrum that is extremely approximate to that of natural light (sunlight). On the light-irradiated surface, a solar battery is placed, for example.

Especially, in the present invention, a light source device provided in the pseudo-sunlight irradiation device has a distinctive characteristic. In view of this, the pseudo-sunlight irradiation device will be described first as an overall arrangement, and then the light source device will be described more specifically.

### (Arrangement of Pseudo-sunlight Irradiation Device)

Fig. 1 is a view illustrating an arrangement of an essential part of the pseudo-sunlight irradiation device 70 according to one embodiment of the present invention. As illustrated in Fig. 1, the pseudo-sunlight irradiation device 70 includes a light source device 1, a housing 3, a reflector 2, and a light guide plate 4.

The light source device 1 is configured to cause light emitted from a light source 11 to travel along an arrow shown in the figure and then enter the reflector 2. Details about this will be described later.

The light source device 1 is provided in either side of the housing 3. In the present embodiment, one light source device 1 is provided in the either side. However, the number of light sources devices 1 to be provided in the either side of the housing 3 is not limited to one.

In the housing 3, a cooling device 3a is provided in the vicinity of a position where each of the light source devices 1 is provided. The cooling device 3a can restrain unevenness in measurement result caused by temperature increase in the entire pseudo-sunlight irradiation device 70 due to the light source 11.

The reflector 2 is provided at a position, on an upper side of the housing 3, where the reflector 2 can receive light emitted from the light source device 1, and is configured to be capable of changing a direction of a light path of the light emitted from the light source device 1 to a desired direction. As the reflector 2, a reflection mirror can be used. The light reflecting off the reflector 2 enters the light guide plate 4.

The light guide plate 4 is provided on the upper side of the housing 3. The light guide plate 4 is configured to receive light reflecting off the reflector 2, guide the light thereinto, and then emit the light toward the light-irradiated surface 80 through a surface region 60.

For the emission of pseudo sunlight from the surface region 60 of the light guide plate 4 toward the light-irradiated surface 80, a light reflection mechanism provided inside the light guide plate 4 is utilized. Fig. 2 is an enlarged view partially illustrating a region 50 in the light guide plate 4 illustrated in Fig. 1. As illustrated in Fig. 2, a plurality of scattering grooves 4a each having a property of reflecting light are provided in the light guide plate 4. Light entering the inside of the light guide plate 4 is reflected by the scattering grooves 4a so as to be guided toward the light-irradiated surface 80, as illustrated in Fig. 2. It is possible to increase evenness in illuminance to some degree by appropriately modifying pitch and shape of the scattering grooves 4a. The pitch and shape should be optimized in conformity with a radiation directivity of light to enter the light guide plate 4. For example, in a case where a xenon lamp is used as the light source 11, the pitch and shape of the light guide plate 4 may be designed in conformity with the radiation directivity of the xenon light.

### (Arrangement of Light Source Device)

With reference to (a) and (b) of Fig. 3, the following describes the light source device 1, more specifically. (a) and (b) of Fig. 3 each illustrate an arrangement of the light source device 1. More specifically, (a) of Fig. 3 illustrates the light source device 1 viewed from the same direction as in Fig. 1. (b) of Fig. 3 illustrates the light source device 1 when the arrangement of (a) of Fig. 3 is viewed from its side.

As illustrated in (a) and (b) of Fig. 3, the light source device 1 includes a light source section 10, a light guide member 20, and an optical filter 30 (a spectrum modulation member). Each of the constituent members is arranged such that light emitted from the light source section 10 enters the light guide member 20, is guided by the light guide member 20 so as to be emitted toward the optical filter 30, and then received by the optical filter 30.

### (Light Source Section)

The light source section 10 includes a light source 11 and a reflection member 12.

As the light source 11, one for use in a conventional pseudo-sunlight irradiation device as a light source can be employed. Examples of the light source 11 encompass a xenon lamp and a halogen lamp. Further, the light source 11 may be formed in a tubular shape, for example. The present embodiment deals with an arrangement in which the light source 11 has the tubular shape. The tubular light source 11 is configured to emit light in a radial manner from its peripheral surface.

The reflection member 12 has a function of receiving light which is emitted from the light source 11 and travels toward directions except for a direction of the light guide member 20 and for reflecting the light thus received toward the light guide member 20. The reflection member 12 is constituted by, as illustrated (a) of Fig. 3, a circular reflector 13 (a U-shaped reflection mirror, a recess), an elliptical reflector 14 (a U-shaped reflection mirror), a side mirror 15, and a front reflector 16 (a return mirror). The following describes each of the members of the reflection member 12.

The circular reflector 13 is a reflection mirror having a groovy shape, provided so as to cover, along a longitudinal direction of the tubular light source 11, a side of the tubular light source 11, which side does not face the light guide member 20. Light emitted from that side of the tubular light source 11 which does not face the light guide member 20 cannot directly enter the light guide member 20. However, the circular reflector 13 reflects the light toward the light guide member 20. Consequently, this arrangement allows the light emitted from that side of the tubular light source 11 which does not face the light guide member 20 to enter the light guide member 20.

The elliptical reflector 14 is formed substantially in a tapered shape such that the elliptical reflector 14 extends from either end of the circular reflector 13 in the groovy shape toward the light guide member 20. The elliptical reflector 14 and the circular reflector 13 can be formed in an integrated manner. In a cut surface (the one shown in (a) of Fig. 3) of such an integrated structure, which cut surface is vertical to a longitudinal axis of the tubular light source 11, it can be said that the integrated structure forms substantially a U shape. The elliptical reflector 14 can reflect, toward the light guide member 20, light emitted from the light source toward directions except for the direction of the light guide member 20, light reflecting off the circular reflector 13 toward directions except for the direction of the light guide member 20, and the like light. The elliptical reflector 14 can be constituted by a reflection mirror.

As illustrated in (b) of Fig. 3, the side mirror 15 is provided at either end of the tubular light source 11. The side mirrors 15 are provided away from one another. A distance (width) between the side mirrors 15 may be set as appropriate so that the distance becomes wider than an incident surface of the light guide member 20. The side mirror 15 is constituted by a mirror in which a plane extending in a vertical direction with respect to the longitudinal axis of the tubular light source 11 is taken as a reflection plane. With the arrangement, it is also possible that light emitted from the light source toward the directions except for the direction of the light guide member 20, light reflecting off the circular reflector 13 toward the directions except for the direction of the light guide member 20, and the like light can be reflected by the side mirror 15 toward the light guide member 20, similarly to the elliptical reflector 14.

The front reflector 16 is provided in the vicinity of the incident surface of the light guide member 20. For example, as illustrated in (a) of Fig. 3, the front reflector 16 is provided at a position adjacent to the incident surface of the light guide member 20. The front reflector 16 includes a reflection mirror such that the reflection mirror faces the elliptical reflector 14 and the circular reflector 13. The front reflector 16 reflects light that deviates from the incident surface of the light guide member due to deviation in radiation angle and therefore travels toward the vicinity of the incident surface of the light guide member, thereby causing the light to travel toward the other reflection members (for example, the elliptical reflector 14 and the circular reflector 13). In other words, the front reflector 16 once returns light that has reached the vicinity of the incident surface of the light guide member back to a side where the light source is provided. As such, the front reflector 16 can cause light emitted from the light source 11 to enter the incident surface of the light guide member 20 more efficiently.

In this way, the reflection member 12 is constituted by various reflection materials. With this arrangement, not only light that is emitted from the light source 11 and directly enters the incident surface of the light guide member 20, but also light that is emitted from the light source 11 but does not directly enter the incident surface of the light guide member 20 can also enter the incident surface of the light guide member 20 in a collective manner by reflecting off such the various reflection materials. This makes it possible to improve utilization efficiency of light emitted from the light source 11.

### (Light Guide Member)

The light guide member 20 has a structure in which, as illustrated in (a) of Fig. 3, a width (length in a x-axial direction in Fig. 3) of the light guide member 20 gradually increases from one end (the light incident surface) of the light guide member 20 toward the other end (the light emission surface) thereof. A direction of the width is parallel to the longitudinal axis of the tubular light source.

Light entering from the incident surface of the light guide member 20 is guided inside the light guide member 20 and then emitted from the emission surface. Radiation of the light that has just entered the incident surface scatters in random directions. However, when the light passes inside the light guide member 20 having the structure illustrated in (b) of Fig. 3, the radiation of the light is changed to be directed toward a given direction. Fig. 4 illustrates one example of how the light passes inside the light guide member 20 illustrated in (b) of Fig. 3. As illustrated in Fig. 4, a side surface (a tapered plane) of the light guide member 20 is configured to be capable of reflecting light. The arrangement causes the light to reflect off the side surface again and again (the light to be repeatedly reflected by the side surface), thereby causing the radiation of the light to be directed into the given direction.

The light guide member 20 includes 4 side surfaces such that two side surfaces are opposite to one another and the other two side surfaces are opposite to one another. That is, the light guide member 20 is constituted by a pair of opposite planes illustrated in (a) of Fig. 3 ((a) of Fig. 3 only illustrates one of the pair) and another pair of opposite planes illustrated in (b) of Fig. 3 ((b) of Fig. 3 only illustrates one of the another pair). Fig. 4 is enlarged views illustrating the planes of the light guide members 20 illustrated in (a) and (b) of Fig. 4. As apparent from Fig. 4, the light guide member 20 is arranged such that the opposite planes in either pair are formed in the tapered shape in which the plane becomes wider toward a light emission side. Noted that the present invention is not limited to this, and may be arranged as illustrated in Fig. 5 in which the opposite planes in either one of the pairs are formed in a rectangular shape. However, with the arrangement of Fig. 4, it is possible to more successfully control a radiation angle (directivity) of light. In Fig. 5, a light path 22 of light traveling toward the emission surface by being reflected is schematically illustrated.

Here, the radiation angle of light is an angle formed between a light axis (z axis) and light emitted from the emission surface of the light guide member 20.

### (Optical Filter)

The optical filter 30 is provided in the vicinity of the emission surface of the light guide member 20 and is configured to receive light that has passed inside the light guide member 20. It is preferable that the optical filter 30 have the same size as that of the emission surface of the light guide member 20, or alternatively be slightly larger than the emission surface in size.

The optical filter 30 is configured to reduce a spectrum having a predetermined waveband. In other words, the optical filter 30 is configured to pass only a spectrum having a given waveband. Any optical filter can be employed provided that the optical filter has such a function.

### (Examination of Directivity of Light Source Device)

(a) and (b) of Fig. 6 each show a result of examination of a directivity of the light source device 1 according to the present embodiment. (a) of Fig. 6 is a graph showing a directivity distribution in an x direction on the emission surface of the light guide member 20. (b) of Fig. 6 is a graph showing a directivity distribution in a y direction on the emission surface of the light guide member 20. Which direction is the x direction and which direction is the y direction are illustrated in (a) and (b) of Fig. 3, respectively.

As demonstrated in (a) and (b) of Fig. 6, with the use of the light source section 10 by which the radiation angle (the directivity) is controlled and the light guide member 20, light having a controlled directivity can be easily radiated toward an optical axis direction.

### (Advantageous Effects of Present Embodiment)

With the above arrangement, the light source device according to the present embodiment can control, by the light guide member 20, a directivity (radiation angle) of light to enter the optical filter 30. That is, the light guide member 20 guides light entering from an incident surface thereof to a light-guiding region in which side surfaces are provided as light reflection planes. The light reflects off the side surfaces repeatedly in the light-guiding region, thereby causing a radiation angle of the light to be controlled. Besides, the light guide member 20 has a tapered shape in which the light guide member 20 gradually increases in width from the incident surface toward the emission surface. This makes it possible to change a radiation directivity of light passing inside the light guide member (the light-guiding region) from random directions into a given direction.

As a result, light having a predetermined directivity is emitted from the emission surface of the light guide member 20.

Further, by providing the light guide member 20 arranged as such, between the light source section 10 and the optical filter 30, it is possible to cause light having a predetermined directivity to enter the optical filter 30. The optical filter 30 has an incidence angle dependence, and therefore the conventional arrangement causes various problems because light having a predetermined directivity does not enter the optical filter. In contrast, with the arrangement of the present embodiment, it is possible to cause light suitable for the incidence angle dependence of the optical filter 30 to enter the optical filter 30, thereby resulting in that light loss can be markedly restrained. Further, it is possible to fully utilize the characteristic of the optical filter 30.

As described above, with the arrangement of the present embodiment, light is sufficiently adjusted (modulated) in the optical filter 30, as compared with the conventional arrangement. In view of this, by providing the light source device 1 of the present embodiment as a light source device of the pseudo-sunlight irradiation device 70 illustrated in Fig. 1, it is possible to realize a device that is capable of irradiating light more approximate to sunlight. A spectrum of the sunlight is shown in Fig. 7 (JIS C 8941).

Further, with the arrangement of the light source device 1 of the present embodiment, the optical filter 30 can receive light having a predetermined directivity. This can realize downsizing of the device, as compared with the conventional arrangement. Consequently, such an arrangement that the light source device 1, which is downsized as such, is provided in the pseudo-sunlight irradiation device 70 can also attain downsizing of the pseudo-sunlight irradiation device.

Moreover, in the above arrangement, reflection planes are arranged in an efficient manner with respect to light having no directivity, irradiated from a light source, so that only light having a desired irradiation characteristic enters the light guide member, thereby realizing downsizing of the device. That is, without using a reflection plane that produces multiple reflections or a large-area reflection plane, it is possible to obtain a desired irradiation characteristic. This makes it possible to downsize the light source device itself.

### [Embodiment 2]

Another embodiment according to the present invention will be described below with reference to Fig. 8 and Fig. 9. In the present embodiment, in order to explain differences between the present embodiment and Embodiment 1, a member having the same function as a corresponding member explained in Embodiment 1 has the same reference sign as that of the corresponding member in Embodiment 1 for convenience sake, and will not be explained here.

Fig. 8 is a view illustrating a light source device 1' according to the present embodiment. The light source device 1' of the present embodiment includes a light source section 10' illustrated in Fig. 8, instead of the light source section 10 provided in the light source device 1 illustrated in Fig. 3. The following describes the light source section 10', more specifically.

The light source section 10' includes a light source 11, a reflection member 12', and a refractive element 17. The light source 11 has the same arrangement as that in Embodiment 1, and therefore will not be explained here.

The reflection member 12' includes a back reflector 18, a side mirror 15, and a side reflector 19.

The back reflector 18 corresponds to the elliptical reflector 14 and the circular reflector 13, which are explained in Embodiment 1.

The side reflector 19 intends to improve efficiency by reflecting, toward a direction of the light guide member 20, light that does not reach the light guide member 20 among light emitted from the light source.

The refractive element 17 is provided at a position where the refractive element 17 can receive light that is going to enter an incident surface of the light guide member 20, right before the light enters the incident surface. The refractive element 17 controls a radiation angle of the received light. More specifically, the refractive element 17 works to converge the radiation angle of the received light. Accordingly, the light whose radiation angle is converged is emitted from the refractive element 17, and then enters the light guide member 20. As the refractive element 17, an optical lens can be employed.

### (Examination of Directivity of Light Source Device)

(a) and (b) of Fig. 9 each show a result of examination of a directivity of the light source device 1' according to the present embodiment. (a) of Fig. 9 is a graph showing a directivity distribution in an x direction on an emission surface of the light guide member 20. (b) of Fig. 9 is a graph showing a directivity distribution in a y direction on the emission surface of the light guide member 20. Which direction is the x direction and which direction is the y direction are illustrated in (a) and (b) of Fig. 8, respectively.

As demonstrated in (a) and (b) of Fig. 9, with the use of the light source section 10' by which the radiation angle (the directivity) is controlled and the light guide member 20, light having a controlled directivity can be easily radiated toward an optical axis direction.

### (Advantageous Effects of Present Embodiment)

In the arrangement, the light source device according to the present embodiment is provided with the refractive element 17, thereby resulting in that the light guide member 20 can receive light having a more controlled radiation angle.

The present invention is not limited to the description of the embodiments above, but may be altered by a skilled person within the scope of the claims. An embodiment based on a proper combination of technical means disclosed in different embodiments is encompassed in the technical scope of the present invention.

It is also possible to say that the present invention has features as follows. That is, a pseudo-sunlight irradiation device according to the present invention is any one of pseudo-sunlight irradiation devices described as follows:
(1) A pseudo-sunlight irradiation device including: a light source; a light guide member that receives, via an incident surface, light emitted from a light source, guides the light thereinto so that the light reflects off side surfaces of the light guide member so as to control a directivity of the light, and then emits, from an emission surface of the light guide member, the light having the directivity thus controlled, the incident surface being smaller than the emission surface; and a spectrum modulation member provided on a side of the emission surface of the light guide member, the spectrum modulation member reducing a spectrum having a predetermined waveband from the light having the directivity thus controlled.
(2) The pseudo-sunlight irradiation device as set forth in (1) further including an elliptical concave-face mirror having a reflection plane whose cross section has an elliptic arc and which reflects the light emitted from the light source, the light having the directivity thus controlled being obtained by the elliptical concave-face mirror.
(3) The pseudo-sunlight irradiation device as set forth in (2) further including an concave-face mirror whose cross section has a circular arc substantially centered at a position where the light source is provided, the concave-face mirror reflecting light emitted from the light source and traveling in a direction opposite to an emission direction by reflecting off the elliptical concave-face mirror having the reflection plane whose cross section has the elliptic arc.
(4) The pseudo-sunlight irradiation device as set forth in (3) further including a concave-face mirror having an opening section for emitting light, provided at a position in a light emission direction with respect to the elliptical concave-face mirror having the reflection plane whose cross section has the elliptic arc, the concave-face mirror having a cross section of a circular arc substantially centered at a position where the light source is provided.
(5) The pseudo-sunlight irradiation device as set forth in any one of (2) through (4) in which the light source is a tubular light source and a mirror is provided in such a manner that the mirror is perpendicular to a direction of a longitudinal axis of the light source.
(6) The pseudo-sunlight irradiation device as set forth in (1) further including: a refractive element for refracting the light emitted from the light source so as to narrow a radiation angle of the light; and a concave-face mirror having a cross section of a circular arc substantially centered at a position where the light source is provided, the concave-face mirror being provided in a direction opposite to the refractive element so as to sandwich the light source therebetween, the light having the directivity thus controlled being obtained by the refractive element and the concave-face mirror.
(7) The pseudo-sunlight irradiation device as set forth in (6) further including a mirror provided between the refractive element and the concave-face mirror having the cross section of the circular arc, the mirror reflecting, toward the refractive element, light that does not directly enter, from the light source, the refractive element and the concave-face mirror.

Furthermore, in addition to the above arrangement, the light source device according to the present invention is preferably arranged such that the light source section includes a reflection member that reflects light which is emitted from the light source but which does not directly enter the incident surface of the light guide member.

With the arrangement, the light source device according to the present invention can cause light emitted from the light source toward directions except for a direction of the light guide member to enter the light guide member by use of the reflection member. This yields an effect that light from the light source can efficiently enter the spectrum modulation member.

Further, in addition to the above arrangement, the light source device according to the present invention is preferably arrange such that the light source section further includes a reflection mirror on a first side of the light source which first side is opposite to a second side of the light source which second surface faces the light guide member, and the reflection mirror is formed in a U shape having an opening toward the light guide member.

In the arrangement, the light source device of the present invention is arranged such that a U-shaped reflection mirror is provided on a side of the light source which side is opposite to another side thereof that faces the light guide member. With the arrangement, it is possible to cause light emitted from the light source toward directions except for the direction of the light guide member to be converged so that the light enters the incident surface of the light guide member.

Furthermore, in addition to the above arrangement, the light source device according to the present invention is preferably arrangement such that the light source is provided inside a region surrounded by the reflection mirror in the U shape, and the reflection mirror in the U shape has a recess along a part of a shape of the light source in the region where the light source is provided.

With the arrangement, the light source device according to the present invention can cause light emitted from the light source toward directions except for the direction of the light guide member to be converged so that the light more efficiently enters the incident surface of the light guide member.

Further, in addition to the above arrangement, the light source device according to the present invention is preferably arranged such that the light source section further includes a return mirror for reflecting light that travels toward a vicinity of the incident surface of the light guide member so as to return the light back to the reflection mirror.

In the above arrangement, the light source device according to the present invention is provided with the return mirror. With the arrangement, light which travels toward the light guide member but deviates to the vicinity of the incident surface of the light guide member due to slight deviation in radiation angle thereof is reflected by the return mirror so that the light can return back to a reflection member (for example, the U-shaped reflection mirror) provided around the light source. This makes it possible to cause light emitted from the light source to more efficiently enter the incident surface of the light guide member.

Moreover, in addition to the above arrangement, the light source device according to the present invention is preferably arranged such that the light source is a tubular light source, which is provided such that a direction of its longitudinal axis is parallel to a direction defining the width of the light guide member, and the light source section further includes a side mirror having a reflection plane extending in a vertical direction with respect to the longitudinal axis of the light source, the side mirror being provided at either end of the tubular light source.

The arrangement makes it possible to cause light emitted from the light source to more efficiently enter the incident surface of the light guide member.

Furthermore, in addition to the above arrangement, the light source device according to the present invention is preferably arranged such that the light source section further includes a refractive element for refracting light that has not entered the incident surface of the light guide member yet, so that a radiation angle of the light is converged, and the reflection member reflects, toward the refractive element, the light which is emitted from the light source but which does not directly enter the incident surface of the light guide member.

With the arrangement, since the light source device according to the present invention is provided with the refractive element, the light guide member can receive light having a more controlled radiation angle.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### Industrial Applicability

The present invention is applicable to examination, measurement, and experiments of solar batteries. Further, the present invention is also applicable to color-fastness tests and light resistance tests of various materials, such as cosmetic products, coating materials, and adhesives. Furthermore, the present invention is applicable to examination and experiments of photocatalyst and other various experiments that require natural light.

### Reference Signs List

- 1: Light Source Device
- 2: Reflector
- 3: Housing
- 3a: Cooling Device
- 4: Light Guide Plate
- 4a: Scattering Groove
- 10: Light Source Section
- 11: Light Source
- 12: Reflection Member
- 13: Circular Reflector (U-shaped Reflection Mirror, Recess)
- 14: Elliptical Reflector (U-shaped Reflection Mirror)
- 15: Side Mirror
- 16: Front Reflector (Return Mirror)
- 17: Refractive Element
- 18: Back Reflector (Reflection Member)
- 19: Side Reflector
- 20: Light Guide Member
- 22: Light Path
- 30: Optical Filter (Spectrum Modulation Member)
- 50: Region
- 60: Surface Region
- 70: Pseudo-sunlight Irradiation Device
- 80: Light-Irradiated Surface

## Claims

1. A light source device comprising:
a light source section including a light source;
a light guide member provided at a position where the light guide member receives light emitted from the light source section; and
a spectrum modulation member provided at a position where the spectrum modulation member receives light emitted from the light guide member,
the light guide member further including:
an incident surface via which the light emitted from the light source section is received; and
an emission surface from which the light thus received via the incident surface is emitted after the light is guided into a light-guiding region having a side surface serving as a light reflection plane that reflects the light,
the light guide member having a tapered shape in which the light guide member gradually increases in width from the incident surface toward the emission surface,
the spectrum modulation member reducing a spectrum having a predetermined waveband from the light thus received from the light guide member, and then emitting the light.

2. The light source device as set forth in claim 1, wherein:
the light source section includes a reflection member for reflecting light which is emitted from the light source but which does not directly enter the incident surface of the light guide member.

3. The light source device as set forth in claim 1 or 2, wherein:
the light source section further includes a reflection mirror on a first side of the light source which first side is opposite to a second side of the light source which second side faces the light guide member, and
the reflection mirror is formed in a U shape having an opening toward the light guide member.

4. The light guide device a set forth in claim 3, wherein:
the light source is provided inside a region surrounded by the reflection mirror in the U shape, and
the reflection mirror in the U shape has a recess along a part of a shape of the light source in the region where the light source is provided.

5. The light source device as set forth in claim 3, wherein:
the light source section further includes a return mirror for reflecting light that travels toward a vicinity of the incident surface of the light guide member so as to return the light back to the reflection mirror,.

6. The light source device as set forth in any one of claims 1 through 5, wherein:
the light source is a tubular light source, which is provided such that a direction of its longitudinal axis is parallel to a direction defining the width of the light guide member, and
the light source section further includes a side mirror having a reflection plane extending in a vertical direction with respect to the longitudinal axis of the light source, the side mirror being provided on either end of the tubular light source.

7. The light source device as set forth in claim 2, wherein:
the light source section further includes a refractive element for refracting light that has not entered the incident light of the light guide member yet, so that a radiation angle of the light is converged, and
the reflection member reflects, toward the refractive element, the light which is emitted from the light source but which does not directly enter the incident surface of the light guide member.

8. A pseudo-sunlight irradiation device comprising a light source device as set forth in any one of claims 1 through 7.

9. The pseudo-sunlight irradiation device as set forth in claim 8, further comprising a light guide plate for receiving light emitted from a spectrum modulation member provided in the light source device.
